# EUROPEAN PATENT SPECIFICATION

(11) **EP 0 722 856 B1**
(45) Date of publication and mention of the grant of the patent: **21.07.1999**
(21) Application number: 96200155.8
(22) Date of filing: 22.01.1996
(51) Int. Cl.: B60P 7/08

(54) **Securing system**
Befestigungssystem
Système de fixation

(30) Priority: 20.01.1995 NL 9500107
(43) Date of publication of application: 24.07.1996
(73) Proprietor: Schulp-Siwers, Hiltje, 1171 LC Badhoevedorp (NL)
(72) Inventor: Roethler, Marty Barry, Paradise, California 95969 (US); Nelson,James Scott, Mechanics ville,Virginia 23111 (US); Wijninga,Maarten Hendrik, 1111 EP Diemen (NL); Hartwijk,Nicole Therese, 1171 KN Badhoevedorp (NL); Van Bruggen,Christian, 1171 KN Badhoevedorp (NL)
(74) Representative: Jilderda, Anne Ayolt

(56) References cited:
- US-A- 4 648 159
- US-A- 4 998 495
- US-A- 5 035 558

## Description

The invention relates to a securing system comprising a cord and at least one fastening member, wherein the fastening member comprises a product with a through passage for receiving the cord therein, a wall of said passage being provided with a longitudinal slot with an open end, wherein said longitudinal slot initially narrows in a direction towards a bottom thereof and ends in an at least substantially straight portion of at least substantially uniform width.

Such a system can be used, for example, for tying together a load and fastening it, for example, to a roof rack or luggage rack of a vehicle. The securing system according to the invention, however, is by no means limited to such an application; on the contrary: it can be used very widely for tying together, for example, goods both inside the home and outdoors or, for example, securing a canvas sheet for covering goods and thus protecting them from external influences.

Such a system is known, for example from US-A-4,992,495, which discloses a device for securing fenders and other objects to the safety rail of a boat. A disadvantage of said system is, however, that its reliability is insufficient for the above mentioned application of tying together a load and fastening it to an object. Moreover, the method of manufacturing of said system is labour-intensive. There is an increasing demand for a system which can be readily adapted and which can be easily and reliably used, especially for securing a load in or against a vehicle.

The present invention has for its object to provide such a securing system.

According to the invention, a securing system of the kind mentioned in the opening paragraph is for this purpose characterized in that the cord comprises an elastic that the fastening member comprises a cast or moulded product and that the length of the straight portion of the longitudinal slot is larger than the diameter of the through passage. In this securing system, the cord is fed through the passage and fixed at the desired length in that the cord is pulled into the longitudinal slot and clamped therein. The system is thus basically adjustable without limitation to the dimensions of a load or goods to be tied together. To readjust the system, the cord is simply pulled from the slot and subsequently fixed therein again at the new length. The invention thus provides the user with a securing system which can be simply and quickly adapted to varying dimensions of, for example, a load, while the elastic cord can be secured in the longitudinal slot in a continuous movement while retaining its optimum resilience. Since all this can be done by hand and without tools, the securing system according to the invention is particularly user-friendly, flexible and widely In the securing system the length of the straight portion of the longitudinal slot is larger than the diameter of the through passage applicable. It was surprisingly found that the shape of the longitudinal slot in practice considerably contributes to the reliability of the system because the cord is introduced in this slot as it were of its own volition. It is suspected that this self-loading effect is obtained through the combination of a sufficiently long straight portion of the longitudinal slot in which the cord can anchor itself reliably and the preceding narrowing portion thereof. This effect facilitates the fixation of the cord which as a result becomes increasingly constricted in the narrowing portion of the longitudinal slot so as to become finally fixed in the straight portion. The manufacture of the fastening member by a casting or moulding process offers a possibility of attuning the shape of the product accurately to the requirements imposed on it.

To enhance the reliability of the system further, a preferred embodiment thereof is characterized in that the longitudinal slot is provided with an insertion safeguard at the area of the straight portion. The insertion safeguard indicates to the user that the cord has been introduced sufficiently far into the slot. In a first special embodiment of this, the insertion safeguard comprises a locally thickened portion of at least one of the side walls of the longitudinal slot. In that case the user will notice a pressure change while inserting the cord, indicating that the cord has been introduced far enough. In a second special embodiment, the fastening member comprises a tubular portion in which the passage is present, and the insertion safeguard comprises a locking ring which at the area of the straight portion is rotatable around the tubular portion over a radial guide. The radial guide may here comprise, for example, a groove or ridge which extends over the circumference of the tubular portion. The cord can be closed in and locked in the longitudinal slot by means of the locking ring, whereby it is prevented even under extreme conditions that the cord can jerk itself loose. The locking ring may itself also be fitted with a pressure point which is noticeable and which fixes the ring in its locking position.

The reliability and ease of use of the system according to the invention are further enhanced in a further preferred embodiment thereof in that it is based on a cord of rubber, which may or may not be natural rubber. Not only does this material allow itself to be readily compressed, which promotes user-friendliness in the present invention, but in addition it experiences a strong friction against the material of the fastening member, which counteracts an inadvertent sudden release of the cord from the longitudinal slot.

In a further special embodiment, the fastening member comprises a hook which opens in the direction of the inlet opening of the passage. The cord may be easily fastened to a suitable point of an article to be tied up or covered by means of the hook. The cord may be fixed at the correct length in the fastening member in the manner described above while at an opposite end it is, for example, connected (semi)permanently to a sheet of canvas with which an article or group of articles can be covered.

In a second special embodiment the fastening member comprises a second through passage. It is possible with such a fastening member to realize a loop at the end of the cord in that an end of the cord is first passed through the second passage and is subsequently fed back into the first passage and is fixed therein in the manner described above. The loop may in this case be laid around a suitable portion of the load so as to achieve a particularly reliable fastening of the cord. In a further, alternative embodiment, the securing system according to the invention is supplemented with a fastening member in the form of a double hook opening in opposite directions, a first hook of which is designed to receive the cord therein. The first hook in this case may be, for example, hooked into the loop.

In a preferred version of the second special embodiment of the securing system according to the invention, the second passage, like the first passage, comprises a longitudinal slot, the two longitudinal slots becoming narrower in opposite directions. In this case it is possible not only to realize a loop, but also to prolong the cord with a second cord in that the first cord is fixed with an end in the first passage and the second cord with an end in the second passage. The securing system according to the invention can thus be extended basically unlimitedly.

A third special embodiment of the securing system according to the invention is characterized in that the fastening member is provided with mounting means for a (semi)permanent fastening of the fastening member. The mounting member may then be mounted beforehand to, for example, a wall of, for example, a vehicle, after which the cord can be brought into connection with the load, be readily passed with one hand through the passage of the fastening member, be tautened therein by pulling, and subsequently be fixed therein. The vehicle may thus be prepared for use with the securing system according to the invention beforehand. This offers a solution not only for vehicles, but it is indeed more generally applicable in an advantageous manner, for example in the home or in a storeroom.

The invention also relates to a fastening member for use in the securing system according to the invention described above, which will be described in more detail below with reference to a number of embodiments and a drawing, in which:
- Figs. 1A-1B: show an example of a first embodiment of the securing system according to the invention;
- Figs. 2A-2B: show an example of a second embodiment of the securing system according to the invention;
- Fig. 3: shows an example of a third embodiment of the securing system according to the invention;
- Fig. 4: shows an example of a fourth embodiment of the securing system according to the invention;
- Fig. 5: shows an accessory for a securing system according to the invention; and
- Figs. 6A-6B: show an example of a fifth embodiment of the securing system according to the invention.
The Figures are purely diagrammatic and not drawn true to scale. Some dimensions have been particularly exaggerated for greater clarity. Corresponding parts have been given the same reference numerals as much as possible in the Figures.

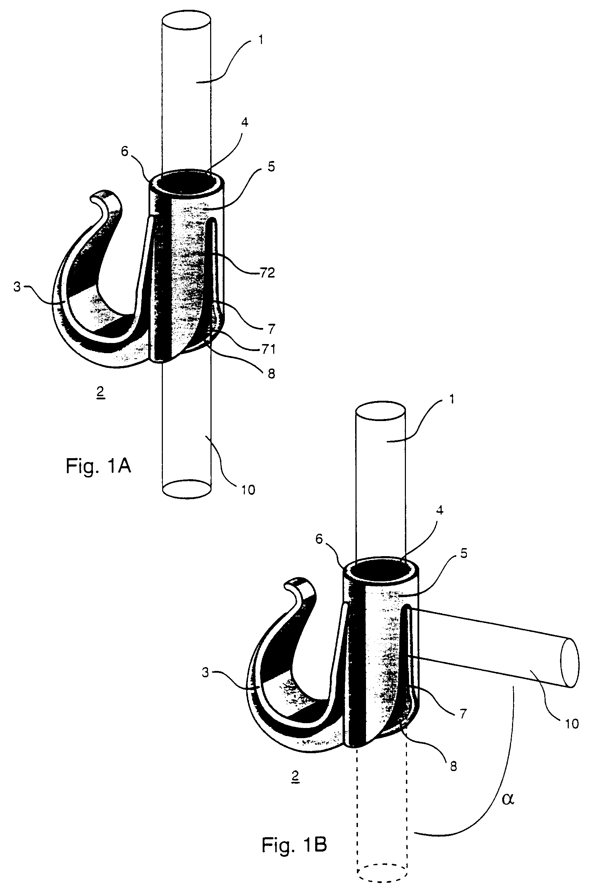

Fig. 1 shows a first embodiment of the securing system according to the invention which in this case comprises besides an elastic cord 1, preferably made of a natural rubber or a suitable synthetic material such as neoprene, a fastening member 2 which is provided with a hook 3 which is open in the direction of an insertion opening 4 of a through passage 5. The cord typically has a diameter of 7 to 11 mm, depending on the desired maximum loading capacity, and may have any length as desired. The passage 5, in this example having a diameter of typically 12 mm and a wall thickness of 3 mm, forms an integral part of the fastening member 2 and is provided with a longitudinal slot 7 with an open end 8 in a wall 6, said end being in open communication with an end 9 of the passage 5. The edges of the passage 5 are preferably rounded as shown in the Figure so as to protect the cord 4 from damage caused by cutting during operation. The fastening member 2 is given the desired shape in one operation by means of injection moulding or extrusion of a suitable synthetic resin material such as nylon or EPDM. The fastening member may alternatively be made not from synthetic resin but, for example, from metal, which in general will provide a greater durability and mechanical strength, but will be more expensive.

In use, the cord will be passed through the passage 5, as shown in Fig. 1A, and subsequently pulled with an end 10 at the correct length into the slot 7 and anchored therein. To guide the cord into the slot 7, the open end 8 of the slot is flared out. In addition, the longitudinal slot 7 narrows initially over part of its length towards its bottom, and then comprises a substantially straight portion 72 in which the cord is eventually fixed. The cord will become increasingly constricted in the narrowing portion 71, finally gliding into the straight portion 72 in which it will be fixed. Once anchored in the straight portion 72 of the slot 7, the end 10 of the cord will remain at an angle α to the remainder of the cord 1 and the longitudinal slot as shown in Fig. 1B. Ideally this angle is approximately 90°. It was found in practice, however, that the angle at which the cord 4 is fixed in the slot 7 in the system according to the invention is not very critical because the cord is automatically pulled more tightly into the slot as a result of the pulling forces exerted on it, so that the angle α will automatically assume a higher value. Thanks to this self-loading effect, the tying systen according to the invention already provides a reliable fastening also in the case of an initially comparatively small fixation angle of the cord. The fastening member 2! may be coupled to a suitable portion of the goods to be tied together by means of the hook 3.

Another end of the cord 1 may be connected, for example, to a canvas sheet with which the goods are covered, or to a roof rack or luggage rack of a vehicle to which a load is tied. A fastening member according to the invention may also be used for fastening this other end. The use of an elastic cord in combination with the fastening member, in accordance with the present invention, has the advantage here that, if the load on the cord becomes too great and the cord is in danger of being stretched out too much, the diameter thereof will become smaller, so that the frictional forces which retain the cord in the slot are reduced. The cord will accordingly be paid out somewhat until its diameter has increased sufficiently for fixing itself in the slot again. The cord thus automatically adapts itself to the load exerted on it so that an overload is avoided at least within certain limits.

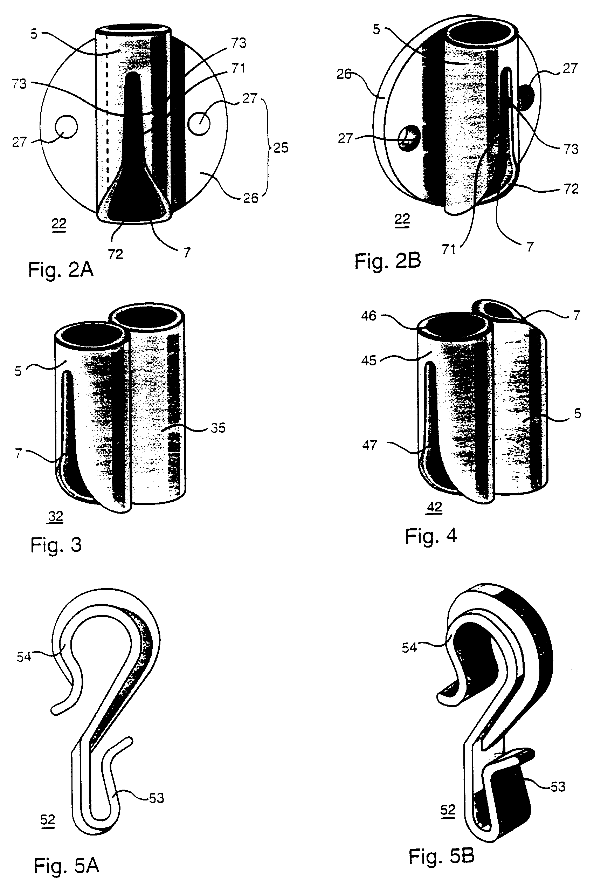

A special embodiment of a fastening member particularly suitable for this purpose is shown in Figs. 2A-2B. The fastening member 22 in this case comprises not only a passage 5 with a narrowing longitudinal slot 7, in which the cord can be fixed in the manner described above, but also mounting means 25 with which the fastening member 22 can be mounted (semi)permanently in a suitable spot. The mounting means 25 in this example comprise a mounting surface 26 provided with two bores 27 on either side of the passage 5. The fastening member 22 may thus be fastened (semi)permanently to, for example, an inner wall of a loading space of a vehicle by means of screw or rivet means suitable for the purpose. The vehicle may thus be adapted to the use of the securing system according to the invention in a simple operation.

In this special embodiment, the fastening member is also provided with an insertion lock in the form of thickened portions 73 provided on either side in the side walls of the slot 7. To achieve a correct fixation of the cord 1 in the straight portion 72 of the slot 7, it is necessary to pull the cord over the thickened portions. The user can feel this as a variation in the degree of stretching of the material, so that a correct positioning of the cord is recognizable by touch.

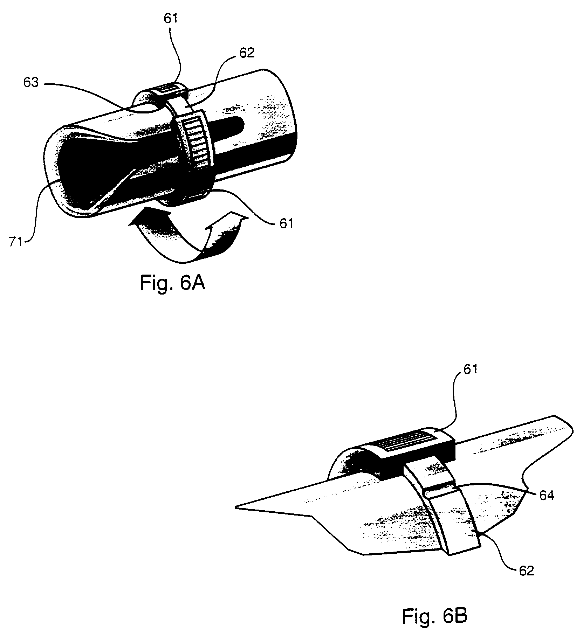

Fig. 3 shows a further embodiment of the securing system according to the invention. The fastening member 32 here comprises a second through passage 35 which extends alongside the first passage 5. The cord 1 is now fed through the second passage 35 and subsequently returned into the first passage 5, in which it is anchored in the manner described above. A loop 39 is formed thereby which may be aplied around a suitable portion of the load so as to achieve a particularly reliable fastening.

A preferred embodiment of such a fastening member 42 with a second passage is shown in Fig. 4. The second cavity 45 here comprises, as does the first cavity 5, a narrowing longitudinal slot 47 in its wall 46, the two longitudinal slots 7,47 becoming narrower in opposite directions. It is now possible with the fastening member 42 not only to form a loop for a reliable fastening to the load, but also to prolong the cord 1 with a second cord 41 by means of the fastening member 42, as depicted in the Figure. The first cord 1 is fixed in one of the two passages and the second cord 51? in the other one. The securing system according to the invention may thus be extended basically without limitation.

The securing system according tot he invention may further be extended with a double hook opening in two opposite directions, an embodiment 52 of which is shown in Fig. 5. A first 53 of the two hooks is designed, for example, for receiving the cord therein, and the second hook 54 can attach the assembly to, for example, the load.

Fig. 6A shows a further embodiment of the securing system according to the invention where the tubular portion comprising the passage 7 is provided with an insertion safeguard in the form of a locking ring 61. The locking ring can be rotated over a guide 62 which runs radially over the tubular portion, and comprises an interruption 63 for allowing the cord to pass. The guide 62 in this example has a ridge over which the ring 61 runs, but it may alternatively be formed by a radial groove in which the ring can rotate. After the cord has been passed through the interruption, the ring 61 is rotated as indicated by the arrow until an end position distinguishable by a cavity or abutment 64 is reached. The interruption 63 has then been rotated to fully outside the slot 7, so that the cord lies closed in in the lower portion of the slot 7. The cord has thus been protected against inadvertent loosening also under extreme conditions.

Many more variations and designs are possible to those skilled in the art without departing from the scope of the invention as defined by the claims. Thus the longitudinal slot may be made, for example, perfectly straight, although this will make it less easy to guide the cord into the slot. Furthermore, the materials used here were mentioned by way of example only, and any material as desired may in principle be used for the various parts; for example, the degree of elasticity of the cord may be adapted to the specific wishes of the user. The fastening members may also be given different shapes, for example, the passage need not be exactly cylindrical but may have an alternative shape. Furthermore, the dimensions of the cord and of the fastening members may be freely adapted so as to deal optimally with a given maximum load.

In general terms, the invention provides an extremely reliable and user-friendly securing system which can be adapted in a simple operation to the external dimensions of goods to be held together by this system.

## Claims

1. A securing system comprising a cord (1) and at least one fastening member (2), wherein the fastening member (2) comprises a product with a through passage (5) for receiving the cord (1) therein, a wall (6) of said passage (5) being provided with a longitudinal slot (7) with an open end (8), wherein said longitudinal slot (7) initially narrows in a direction towards a bottom thereof and then ends in an at least substantially straight portion (72) of at least substantially uniform width, characterized in that the cord (1) comprises an elastic cord, that the fastening member (2) comprises a cast or moulded product and that the length of the straight portion (72) of the longitudinal slot is larger than the diameter of the through passage (5).

2. A securing system as claimed in Claim 1, characterized in that the longitudinal slot (7) is provided with an insertion safeguard at the area of the straight portion.

3. A securing system as claimed in Claim 2, characterized in that the insertion safeguard comprises a locally thickened portion (73) of at least one of the side walls of the longitudinal slot (7).

4. A securing system as claimed in Claim 2, characterized in that the fastening member comprises a tubular portion in which the passage is present, and the insertion safeguard comprises a locking ring (61) which at the area of the straight portion is rotatable over a radial guide around the tubular portion.

5. A securing system as claimed in any one or several of the preceding Claims, characterized in that the cord (1) comprises a rubber, which may or may not be a natural rubber.

6. A securing system as claimed in any one or several of the preceding Claims, characterized in that the fastening member (2) comprises a hook (3) which opens in the direction of the insertion opening.

7. A securing system as claimed in one or several of the Claims 1 to 5, characterized in that the fastening member (2) is provided with mounting means (25) for a (semi)permanent fastening thereof.

8. A securing system as claimed in one or several of the Claims 1 to 5, characterized in that the fastening member comprises a second through passage (35) which extends alongside the first passage (5).

9. A securing system as claimed in Claim 8, characterized in that, like the first passage (5), the second passage (35) comprises a longitudinal slot, the two longitudinal slots becoming narrower in opposite directions.

10. A securing system as claimed in Claim 8 or 9, characterized in that the system is provided with a fastening member in the form of a double hook (52) opening in opposite directions, a first hook (53) of which is designed to receive the cord.

11. A securing system as claimed in any one of the preceding Claims, characterized in that the edges of the passage in the fastening member are rounded.

12. A fastening member for use in the securing system as claimed in any one of the preceding Claims.

## Patentansprüche

1. Ein Befestigungssystem, das eine Schnur (1) umfaßt, und mindestens ein Befestigungselement (2), wobei das Befestigungselement (2) ein Produkt mit einem Durchgang (5) zur Aufnahme der Schnur (1) darin umfaßt, eine Wand (6) des besagten Durchganges (5) mit einem Längsschlitz (7) mit einem offenen Ende (8) versehen ist, worin der besagte Längsschlitz (7) sich anfänglich in einer Richtung zu einem tiefsten Teil davon verjüngt und dann in einem zumindest im wesentlichen geraden Abschnitt (72) mit einer zumindest im wesentlichen gleichbleibenden Breite endet, dadurch gekennzeichnet, daß die Schnur (1) aus einer elastischen Schnur besteht, daß das Befestigungselement (2) ein formgegossenes oder spritzgeformtes Produkt umfaßt und daß die Länge des geraden Abschnitts (72) des Längsschlitzes größer als der Durchmesser des Durchganges (5) ist.

2. Ein Befestigungssystem nach Anspruch 1, dadurch gekennzeichnet, daß der Längsschlitz (7) mit einer Einführungssicherung im Bereich des geraden Teils versehen ist.

3. Ein Befestigungssystem nach Anspruch 2, dadurch gekennzeichnet, daß die Einführungssicherung einen örtlich verdickten Abschnitt (73) an mindestens einer der Seitenwände des Längsschlitzes (7) umfaßt.

4. Ein Befestigungssystem nach Anspruch 2, dadurch gekennzeichnet, daß das Befestigungselement einen röhrenförmigen Abschnitt, in dem der Durchgang anwesend ist, umfaßt und die Einführungssicherung einen Schließring (61) umfaßt, der im Bereich des geraden Abschnitts über eine radiale Führung um den röhrenförmigen Abschnitt drehbar ist.

5. Ein Befestigungssystem nach irgendeinem oder mehreren der vorhergehenden Ansprüche, dadurch gekennzeichnet, daß die Schnur (1) aus einem Gummi besteht, der ein Naturkautschuk sein kann oder auch nicht.

6. Ein Befestigungssystem nach irgendeinem oder mehreren der vorhergehenden Ansprüche, dadurch gekennzeichnet, daß das Befestigungselement (2) einen Haken (3) umfaßt, der in der Richtung der Einführöffnung öffnet.

7. Ein Befestigungssystem nach einem oder mehreren der Ansprüche 1 bis 5, dadurch gekennzeichnet, daß das Befestigungselement (2) mit Befestigungsvorrichtungen (25) zur (teil)permanenten Befestigung davon versehen ist.

8. Ein Befestigungssystem nach einem oder mehreren der Ansprüche 1 bis 5, dadurch gekennzeichnet, daß das Befestigungselement einen zweiten Durchgang (35) umfaßt, der neben dem ersten Durchgang (5) verläuft.

9. Ein Befestigungssystem nach Anspruch 8, dadurch gekennzeichnet, daß wie der erste Durchgang (5) der zweite Durchgang (35) einen Längsschlitz besitzt, wobei die beiden Längsschlitze sich in entgegengesetzten Richtungen verjüngen.

10. Ein Befestigungssystem nach Anspruch 8 oder 9, dadurch gekennzeichnet, daß das System mit einem Befestigungselement in der Form eines doppelten Hakens (52) versehen ist, der in entgegengesetzten Richtungen öffnet, wovon ein erster Haken (53) zur Aufnahme der Schnur entworfen ist.

11. Ein Befestigungssystem nach irgendeinem der vorhergehenden Ansprüche, dadurch gekennzeichnet, daß die Ränder des Durchganges in dem Befestigungselement abgerundet sind.

12. Ein Befestigungselement zur Verwendung in dem Befestigungssystem nach irgendeinem der vorhergehenden Ansprüche.

## Revendications

1. Système de fixation comprenant une corde (1) et au moins une pièce de fixation (3), dans lequel la pièce de fixation (2) comprend un produit muni d'un conduit tubulaire (5) destiné à recevoir la corde (1), une paroi (6) dudit conduit tubulaire (5) étant munie d'une fente longitudinale (7) avec une extrémité ouverte (8), dans lequel ladite fente longitudinale (7) se rétrécit initialement vers sa partie basse puis se termine en une partie au moins substantiellement droite (72) d'une largeur au moins substantiellement uniforme, caractérisé par le fait que la corde (1) comprend une corde élastique, que la pièce de fixation (2) comprend un produit moulé et que la longueur de la partie droite (72) de la fente longitudinale est supérieure au diamètre du conduit tubulaire (5).

2. Système de fixation selon la revendication 1, caractérisé par le fait que la fente longitudinale (7) est munie d'une sécurité, au niveau de la partie droite, qui permet de bloquer la corde une fois que celle-ci est introduite.

3. Système de fixation selon la revendication 2, caractérisé par le fait que ladite sécurité comprend une partie localement plus épaisse (70) d'au moins une des parois latérales de la fente longitudinale (7).

4. Système de fixation selon la revendication 2, caractérisé par le fait que la pièce de fixation comprend une partie tubulaire dans laquelle le conduit tubulaire est présent et par le fait que la sécurité comprend une bague de verrouillage (61) qui peut tourner, au niveau de la partie droite, sur un guide radial autour de la partie tubulaire.

5. Système de fixation selon l'une ou plusieurs des revendications précédentes, caractérisé par le fait que la corde (1) comprend du caoutchouc, qui peut être ou non du caoutchouc naturel.

6. Système de fixation selon l'une ou plusieurs des revendications précédentes, caractérisé par le fait que la pièce de fixation (2) comprend un crochet (3) qui s'ouvre dans la direction de l'orifice d'introduction.

7. Système de fixation selon l'une ou plusieurs des revendications 1 à 5, caractérisé par le fait que la pièce de fixation (2) est munie d'un support d'accrochage (25) permettant de la fixer de manière permanente ou temporaire.

8. Système de fixation selon l'une ou plusieurs des revendications 1 à 5, caractérisé par le fait que la pièce de fixation comprend un deuxième conduit tubulaire (35) parallèle au premier conduit tubulaire (5).

9. Système de fixation selon la revendication 8, caractérisé par le fait que tout comme le premier conduit tubulaire (5), le second conduit tubulaire (35) comprend une fente longitudinale, les deux fentes longitudinales se rétrécissant dans des directions opposées.

10. Système de fixation selon la revendication 8 ou 9, caractérisé par le fait que le système est muni d'une pièce de fixation ayant la forme d'un double crochet (52) s'ouvrant dans des directions opposées, le premier crochet (53) étant conçu pour recevoir la corde.

11. Système de fixation selon l'une quelconque des revendications précédentes, caractérisé par le fait que les rebords du conduit tubulaire dans la pièce de fixation sont arrondis.

12. Pièce de fixation destinée à être utilisée dans le système de fixation tel qu'il est défini dans l'une quelconque des revendications précédentes.
